Europäisches Patentamt

European Patent Office

Office européen des brevets

(19)

(11) **EP 1 312 083 B1**

(12) **FASCICULE DE BREVET EUROPEEN**

(45) Date de publication et mention
de la délivrance du brevet:
**17.03.2004 Bulletin 2004/12**

(21) Numéro de dépôt: **01963111.8**

(22) Date de dépôt: **20.08.2001**

(51) Int Cl.⁷: **G11B 7/14**, G11B 11/03,
G11B 7/00, G11B 7/12

(86) Numéro de dépôt international:
**PCT/FR2001/002633**

(87) Numéro de publication internationale:
**WO 2002/017312 (28.02.2002 Gazette 2002/09)**

(54) **DISPOSITIF D'ECRITURE/LECTURE DE DONNEES NUMERIQUES A CONTROLE OPTIQUE**

DATENAUFZEICHNUNGS- /-WIEDERGABEGERÄT MIT OPTISCHER KONTROLLE

OPTICALLY CONTROLLED DIGITAL DATA READ/WRITE DEVICE

(84) Etats contractants désignés:
**AT BE CH CY DE DK ES FI FR GB GR IE IT LI LU
MC NL PT SE TR**

(30) Priorité: **21.08.2000 FR 0010763**

(43) Date de publication de la demande:
**21.05.2003 Bulletin 2003/21**

(73) Titulaire: **Commissariat A L'Energie Atomique
75752 Paris 15ème (FR)**

(72) Inventeur: **GIDON, Serge
F-38140 LA MURETTE (FR)**

(74) Mandataire: **Simonnet, Christine et al
c/o Brevatome,
3, rue du Docteur Lancereaux
75008 Paris (FR)**

(56) Documents cités:
**EP-A- 0 568 753          EP-A- 1 026 674
WO-A-98/28320          US-A- 6 084 848**

• **HOSAKA S ET AL: "NANOMETER-SIZED
PHASE-CHANGE RECORDING USING A
SCANNING NEAR-FIELD OPTICAL
MICROSCOPE WITH A LASER DIODE"
JAPANESE JOURNAL OF APPLIED
PHYSICS,JP,PUBLICATION OFFICE JAPANESE
JOURNAL OF APPLIED PHYSICS. TOKYO, vol.
35, no. 1B, 1996, pages 443-447, XP000729850
ISSN: 0021-4922**

## Description

### DOMAINE TECHNIQUE

La présente invention concerne un dispositif d'écriture/lecture de données numériques à contrôle optique. Un tel dispositif peut être utilisé pour réaliser un stockage de données numériques à haute densité avec des débits d'accès élevés. Il peut également être utilisé pour réaliser une écriture/lecture de biopuces par champ proche en ultra haute densité.

### ETAT DE LA TECHNIQUE ANTERIEURE

Dans la suite de la description, on considéra, à titre d'exemple de réalisation du dispositif de l'invention, un dispositif de stockage de données haut débit à contrôle optique.

Un tel stockage de données, primordial dans le domaine informatique et multimédia, est le plus souvent réalisé sous forme binaire, ce qui permet une excellente reproductibilité des informations. Le domaine des dispositifs de stockage s'étend des circuits intégrés (mémoires ROM ou RAM) limités en capacité de stockage (mégaoctet) mais offrant une accessibilité élevée aux données (quelques centaines de MHz) aux bandes magnétiques qui présentent un très grand volume de stockage (pétaoctets), mais qui sont peu performantes en temps d'accès

Entre ces deux types de dispositifs, il existe des dispositifs d'enregistrement sur disques qui présentent un compromis entre volume et débit d'accès (gigaoctets, dizaines de MHz), avec des techniques d'enregistrement magnétiques et/ou optiques :

- L'enregistrement magnétique repose sur l'orientation du champ coercitif de domaines d'un support sous l'effet d'une induction magnétique.
- L'enregistrement optique repose sur la modification de la structure microscopique du matériau d'enregistrement par chauffage optique, par exemple avec la création de micro-défauts (cavités) dans un matériau plastique ou des modifications locales des caractéristiques physiques de matériaux à changement de phase : par exemple cristalline/amorphe dans le cas de dispositifs DVD RAM, comme décrit dans le document référencé [1] en fin de description.

De nombreux développements sont en cours pour atteindre une plus grande densité de stockage et de bonnes performances concernant le flux de données. On peut citer les méthodes :

- MSR ("Magnetic Super Resolution") ou MAMMOS ("Magnetic Amplify Magneto-optical System"), méthodes de stockage magnétique avec concentration du champ au sein d'un volume aussi réduit que possible,
- SIL ("Solid Immersion Lens"), méthode purement optique, qui exploite l'optique aux limites de résolution et semble tout à fait adaptée au stockage sur supports amovibles grâce à une tolérance en profondeur de champ optique, avec des densités de stockage limitées à 2,5 Gb/in$^2$, (1 in = 2,54 cm),
- et des méthodes à effet de micropointes, qui sont prometteuses en terme de densités de stockage d'informations, 30 Gb/in$^2$ à 1 Tb/in$^2$ étant envisagées, notamment :

  - micro-mécanique d'IBM,
  - STM ("Scanning Tunneling Microscopy"),
  - AFM ("Atomique Force Microscopy"),
  - MFM ("Magnetic Force Microscopy"),
  - EFM (""Electrostatic Force Microscopy"),
  - SNOM ("Scanning Optical Near field, Microscopy") avec ses variantes :

    - \* SIAM ("Scanning interferometric Apertureless Microscopy"),
    - \* SPNM ("Scanning Plasmon Near field Microscopy").

De telles méthodes sont très exigeantes en ce qui concerne la propreté du support, ce qui nécessite l'utilisation de cartouches d'enregistrement étanches aux poussières. Une analyse comparative de plusieurs de ces méthodes est donnée dans le document référencé [2].

Les systèmes micromécanique à micropointes restent limités en débits de données par pointe, par conception. En effet, un compromis entre une fréquence de modulation mécanique élevée des micropointes nécessaire pour suivre les motifs de surface, qui est limitée à quelques MHz par l'inertie des bras de suspension, et une immunité aux vibrations parasites est impossible à réaliser.

Comme décrit dans le document référencé [2], seule la méthode optique SNOM et ses variantes offre des débits élevés, limités uniquement par le bruit quantique du nombre de photons par bits. Elle nécessite, cependant, des puissances optiques importantes pour la phase d'enregistrement, du fait d'un effet thermique purement optique.

L'objet de l'invention est donc de réaliser un dispositif permettant d'obtenir un tel compromis, en proposant notamment un dispositif de stockage de données numériques qui offre de grandes capacités de stockage ainsi que des débits d'échange de données élevés.

### EXPOSÉ DE L'INVENTION

L'invention propose un dispositif d'écriture/lecture de données numériques à contrôle optique, comprenant une tête d'enregistrement solidaire d'un équipage mobile, qui se déplace au-dessus d'un support d'enregistrement muni de plusieurs pistes, caractérisé en ce que cette tête comporte plusieurs micropointes fonctionnant en parallèle, associées chacune à un circuit d'optique guidée, qui adressent les pistes du support d'enregistrement, en ce que chaque micropointe fonctionne à la fois en modes écriture et lecture, en ce que le circuit d'optique guidée, associé à chaque micropointe :

- se comporte, en mode écriture, comme un guide de lumière jusqu'à la zone photosensible de la micropointe,
- collecte, en mode lecture, le signal de diffraction de l'onde incidente sur la micropointe,

et en ce que les circuits d'optique guidée sont reliés directement à une unité de traitement au travers d'un bus optique, formé par exemple de fibres optiques.

Avantageusement chaque micropointe comporte des moyens de chauffage Joule commandés optiquement, pour réaliser l'écriture d'un point mémoire sur le support d'enregistrement. Chaque micropointe comporte des moyens à effet de type SNOM ou SIAM pour réaliser la lecture d'un point mémoire sur le support d'enregistrement. Chaque micropointe comprend une capacité de découplage dont une électrode est intégrée au sein de la tête, et l'autre électrode est constituée par le support d'enregistrement. Chaque micropointe comprend des moyens de contrôle du courant, par effet photoélectrique, grâce à une jonction semi-conductrice.

Dans chaque micropointe les longueurs d'onde d'excitation peuvent être différentes en modes lecture et écriture. On peut également avoir seulement une partie du flux incident absorbé dans une jonction semi-conductrice de chaque micropointe, l'autre partie servant en détection en lecture.

Dans un mode de réalisation, plusieurs plateaux mémoire peuvent être montés sur les mêmes axes du support d'enregistrement.

Dans un mode de réalisation le support d'enregistrement est un disque mémoire. La tête d'enregistrement a la forme d'un patin qui vole par effet aérodynamique de coussin d'air au-dessus de la surface du disque. La tête adresse des pistes en spirales imbriquées, disposées sur le disque avec des repères de guidage de la tête sur le disque répartis sur une spirale intercalée entre toutes. Une micropointe de la tête est dédiée à la lecture des repères de guidage de la tête.

Dans un mode de réalisation avantageux, la tête comporte :

- des micropointes comprises dans un matériau isolant qui constituent la base d'un patin avec chanfrein aérodynamique,
- des guides optiques pour amener ou prélever des ondes lumineuses au voisinage des micropointes,
- une zone photo sensible de chaque micropointe en regard de chaque guide optique,

- une électrode de la capacité de découplage du circuit électrique avec l'autre électrode constituée du support d'enregistrement,
- un épanouisseur de guides qui permet une interconnexion aisée de la tête à une nappe de fibres de liaison vers l'unité de traitement.

La tête peut comprendre en outre deux réseaux de micro-lentilles en vis-à-vis au pas de sortie de l'épanouisseur, placées en extrémité des guides, pour permettre une interconnexion aérienne de la tête à la nappe de fibres.

Avantageusement l'équipage mobile comprend un bras de suspension qui permet de maintenir le patin en regard des pistes d'enregistrement, avec un moteur de déplacement pour positionner la tête en regard des pistes d'enregistrement.

Avantageusement, les micropointes sont séparées d'une distance minimum de 20 μm pour éviter toute diaphonie entre les guides voisins du circuit optique. Elles sont de préférence réalisées en silicium dopé pour être conducteur et comprises dans un matériau isolant en silice, qui peut être recouvert d'une couche de nitrure ou carbure de silicium, pour éviter l'usure.

Dans une variante de réalisation un actionneur est intégré dans le patin pour déplacer spécifiquement les micropointes. Le patin peut être micro-usiné afin de libérer un équipage mobile portant les micropointes.

Dans une variante de réalisation chaque circuit d'optique guidée comporte en son extrémité un moyen pour réfléchir l'onde guidée sur elle-même.

Le dispositif de l'invention peut être utilisé pour réaliser un dispositif de stockage à haute densité avec débit d'accès élevé aux données. Il peut également être utilisé pour réaliser un dispositif d'écriture/lecture de bio-puces par champ proche en ultra haute densité.

Le dispositif de l'invention offre de multiples avantages :

- la commande du courant de micropointe est une commande en courant, peu sensible à la résistivité fluctuante du contact électrique avec le support d'enregistrement,
- la commande optique est très rapide, au point que le courant peut être appliqué pendant des temps de l'ordre de grandeur de la constante de temps thermique du matériau (de l'ordre de quelques nanosecondes), ce qui permet un échauffement contrôlé du matériau, sans phénomène d'avalanche,
- l'approche en mode écriture bien que d'apparence analogue à la méthode SNOM (dans laquelle la puissance est déposée sous forme lumineuse), en diffère foncièrement puisqu'une amplification de la puissance optique au travers de la conversion photons/électrons est mise en oeuvre. Cette amplification permet de pallier au défaut de la méthode SNOM, qui est de nécessiter une puissance laser importante, de quelques mW. Ce gain en puissance, qui est le rapport de la puissance électronique de chauffage disponible sur la puissance optique appliquée, est dans le rapport de l'énergie des électrons à l'énergie des photons. Il admet une valeur de l'ordre de la tension appliquée sur la micropointe (20 à 100, dans le cas d'énergie de photons de l'ordre de l'eV ; $\lambda = 1 \ \mu m$).

- la commande optique peut être déportée de plusieurs centimètres, ou plus avec des fibres, sans risquer des couplages électromagnétiques entre signaux de commande à fréquences de modulation élevées.

**BRÈVE DESCRIPTION DES DESSINS**

La figure 1 illustre schématiquement le dispositif d'écriture/lecture de l'invention.

La figure 2 illustre le branchement du dispositif de l'invention à un bus optique inter-processeurs.

La figure 3 illustre un exemple de réalisation d'un disque mémoire muni de pistes en spirales imbriquées.

La figure 4 illustre le positionnement des micropointes de la tête du dispositif de l'invention par rapport aux pistes du disque mémoire illustré sur la figure 3.

Les figures 5A et 5B illustrent respectivement une vue de profil et une vue de face d'un mode de réalisation du dispositif de l'invention ; la figure 5B illustrant, de plus, une interconnexion avec deux réseaux de fibres.

La figure 6 illustre le couplage d'un guide optique et d'une micropointe dans le dispositif de l'invention.

Les figures 7A et 7B illustrent respectivement une vue de profil et une vue de face d'une variante de réalisation du dispositif de l'invention.

La figure 8 illustre une autre variante de réalisation du dispositif de l'invention.

**EXPOSÉ DÉTAILLÉ DE MODES DE RÉALISATION PARTICULIERS**

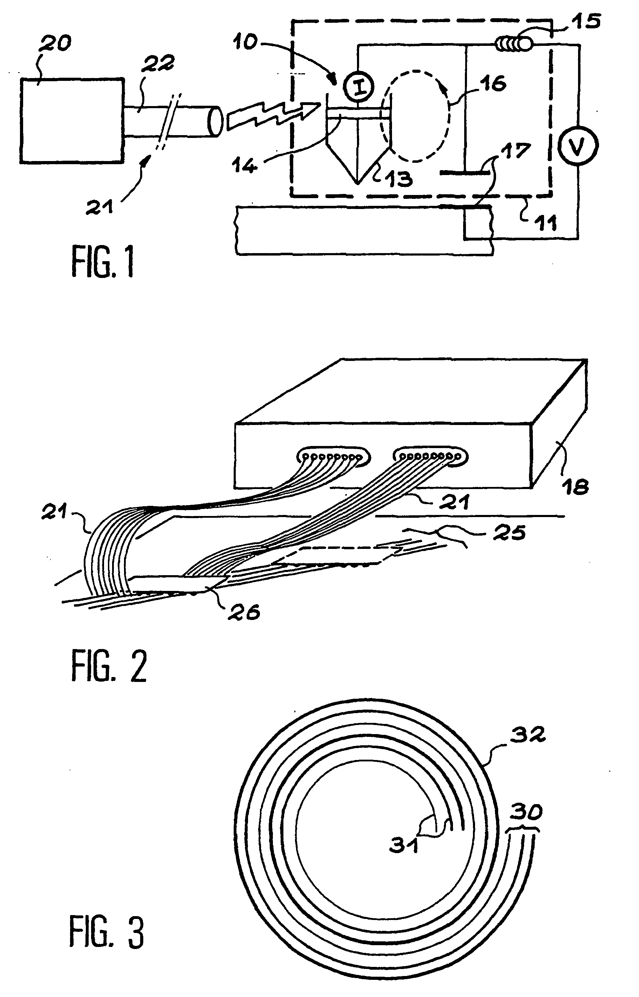

Comme illustré sur la figure 1, le dispositif d'écriture/lecture de données numériques de l'invention comprend une tête d'enregistrement 10 solidaire d'un équipage mobile 11, qui se déplace au-dessus d'un support d'enregistrement 12 muni de plusieurs pistes. Cette tête comporte plusieurs micropointes 13 fonctionnant en parallèle, associées chacune à un circuit d'optique guidée, qui adressent les pistes du support d'enregistrement 12.

Chaque micropointe 13 fonctionne à la fois en modes écriture et lecture.

Chaque circuit d'optique guidée, associé à une micropointe 13, se comporte, en mode écriture, comme un guide de lumière jusqu'à une zone photosensible 14 de la micropointe 13. L'effet de pointe, alors mis en oeuvre, est un chauffage Joule localisé commandé optiquement. Le courant d'écriture est piloté par un dispositif optique, par exemple une diode (source de photons) qui illumine, via un guide optique 22 d'un bus optique 21, la micropointe 13. Celle-ci est munie d'une jonction photoconductrice 14 permettant de piloter le courant qui traverse celle-ci, et donc le chauffage du support d'enregistrement 12 sous la micropointe 13.

L'écriture de données, en utilisant une méthode à effet de pointe, permet d'obtenir une grande densité de stockage car c'est la micropointe 13 qui définit la taille du point mémoire élémentaire correspondant.

En mode lecture le circuit d'optique guidée collecte le signal de diffraction de l'onde incidente sur la micropointe perturbée des caractéristiques locales du matériau du support 12 situé au-dessous. Un effet de type SNOM reposant sur détection de la variation d'amplitude de l'onde d'analyse ou de type SIAM, qui est une variante interférométrique de celui-ci reposant sur la détection de la variation de phase de l'onde d'analyse, est alors mis en oeuvre. Dans ce mode lecture on utilise le même dispositif que pour l'écriture. La micropointe 13 éclairée par le même signal de diode induit un écho optique variable en fonction de la nature du matériau du support 12 situé sous cette micropointe 13. Cet écho optique est alors détecté par une photodiode.

En mode écriture, le courant passant dans la micropointe 13 est contrôlé. Ce contrôle est un contrôle de l'amplitude du courant de micropointe, par un effet photoélectrique comme celui existant par exemple au sein d'une jonction semi-conductrice P/N ou PIN, ou de tout autre effet photo généré comme l'effet photo résistance. Dans le dispositif de l'invention, la jonction 14, qui joue le rôle de modulateur photocommandé, fait partie intégrante de la micropointe 13. Lorsqu'elle est éclairée, elle laisse passer un courant, en général proportionnel au flux de photons incidents.

Un circuit haute-fréquence, ou HF, (boucle de courant HF 16), est confiné au voisinage de la micropointe 13 grâce à une architecture de découplage électromagnétique. Une source de polarisation V, fournit l'énergie (un courant I sous une tension V) de l'écriture. Une inductance ou résistance de découplage 15 isole du reste de l'électronique, le circuit HF constitué de la pointe et de la capacité de découplage 17, par couplage à une capacité de découplage 17. Cette capacité 17 a une de ses électrodes dans un plan du support de la micropointe 13, et l'autre constituée par la surface du support d'enregistrement 12.

Le dispositif de l'invention intègre ainsi, au sein d'une même tête, plusieurs micropointes 13 (M) fonctionnant en parallèles. Plusieurs "plateaux" mémoire (P) peuvent d'ailleurs être classiquement montés sur le même axe du support d'enregistrement 12, pour accroître sa capacité de stockage, pour que le bus optique 21 atteigne le degré de parallélisme recherché (N = P x M).

Pour satisfaire les exigences de compromis d'absorption du flux d'écriture et de transmission du signal de lecture, il est possible, soit :

- d'utiliser des longueurs d'onde d'excitation de l'effet de pointe différentes suivant les modes écriture ou lecture. Par exemple, dans le cas d'une jonction dans le silicium (gap vers 1 μm de longueur d'onde) une longueur d'onde d'écriture inférieure à 1 μm est absorbée dans la jonction 14 et une longueur d'onde supérieure à 1 μm (1,3 mm), domaine de moindre absorption du silicium, peut être utilisé en mode lecture,

- dans le cas d'un fonctionnement à une longueur d'onde unique, d'optimiser la position du guide 22 par rapport à la micropointe pour, par exemple, n'absorber qu'une partie du flux incident dans la jonction 14, l'autre partie servant à la détection en mode lecture.

Comme illustré sur la figure 1, les circuits d'optique guidée sont reliés directement à une unité de traitement 20 au travers du bus optique 21 formé de guides optiques 22. Le dispositif de l'invention permet ainsi de réaliser un interface entre le support d'enregistrement 12 (stockage des données) et cette unité de traitement 20, la diode et la photodiode considérées plus haut étant implantées dans cette unité de traitement 20.

Le bus optique 21 est dimensionné en bande passante pour offrir le meilleur débit de données. Les densités de stockage sont telles, qu'avec une vitesse linéique du support d'enregistrement 12 de plusieurs dizaines de mètres par seconde (habituelle en enregistrement classique), des débits binaires de plusieurs centaines de MHz sont atteints.

Le support d'enregistrement 12 peut être réalisé en tous matériaux conducteurs, par exemple des matériaux à changement de phase ou des matériaux magnétiques. Dans le cas des matériaux magnétiques, des moyens (classiques) d'induction de champ sont placés au voisinage des pointes, étant donné que la phase d'enregistrement des données est réalisée par effet Joule.

Comme illustré sur la figure 2, le bus optique 21 sortant du dispositif de l'invention 18, par exemple à fibres optiques, peut être disposé en prolongement d'un bus 25 d'interconnexions optiques de processeurs à fibres optiques, grâce à un connecteur 26. Un tel bus 25 autorise le traitement de mots binaires par différents processeurs (bus à N voies, N est généralement multiple de 8 : par exemple 32, voire 64 bits.).

Dans un mode de réalisation illustré sur la figure 3, le support d'enregistrement 12 est un disque mémoire. La tête à micropointes adresse des pistes en spirales imbriquées, distantes de 10 à 200 nm, avec des repères de guidage de la tête, du type de ceux décrits dans le document référencé [3], répartis eux-mêmes sur une spirale intercalée. Ces repères sont lus par une micropointe éventuellement dédiée à cet usage. Sur la figure 3, à titre d'exemple on a trois pistes imbriquées 30 dont deux pistes de données 31, et une piste 32 sur laquelle sont disposés les repères de guidage de la tête.

Dans ce mode de réalisation du dispositif de l'invention, les micropointes 13 sont placées très près de la surface du support d'enregistrement 12 : typiquement quelques dizaines de nanomètres. Ces micropointes 13 sont intégrées au sein d'une tête d'enregistrement 10, en forme de patin de forme aérodynamique qui "vole" par un effet de coussin d'air au-dessus de la surface du support d'enregistrement, moyennant des conditions de vitesses relatives. Une telle solution est décrite, en enregistrement classique, dans le document référencé [4]. Un bras de suspension permet de maintenir le patin en regard des pistes d'enregistrement avec un moteur de déplacement pour positionner la tête en regard des pistes d'enregistrement.

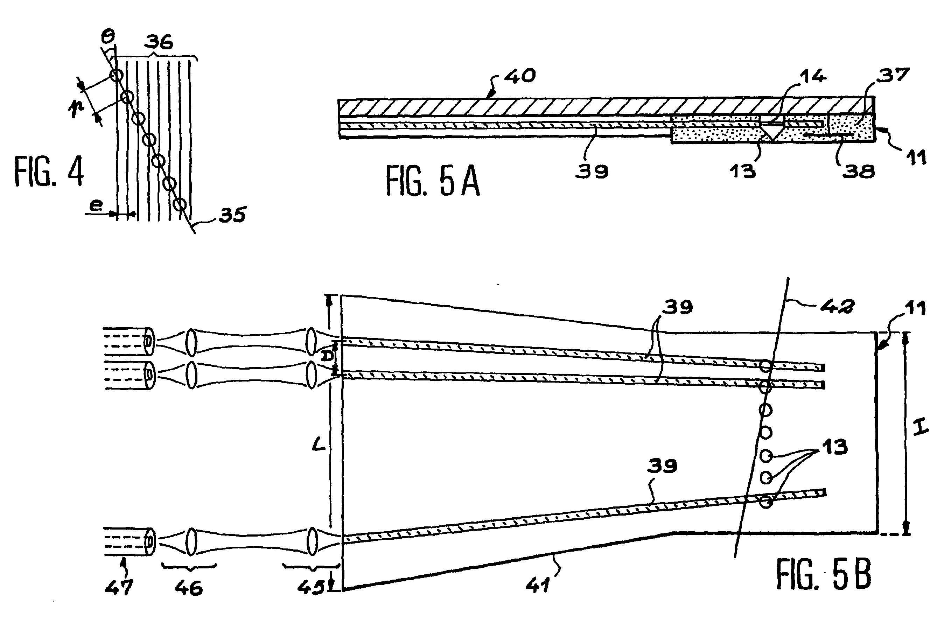

Comme illustré sur la figure 4, les micropointes 13 sont séparées d'une distance minimum p de quelques 20 μm, pour éviter toute diaphonie entre les guides voisins du circuit optique. Pour atteindre la densité de stockage surfacique recherchée (proximité des pistes sur le support d'enregistrement de 10 à 500 nm), l'axe d'alignement 35 des micropointes 13, par rapport à la direction tangentielle des pistes 36, est incliné d'un angle $\theta$. La distance de séparation e des pistes est alors directement liée au pas p des micropointes 13 par la relation $\sin \theta = e/p$. En pratique, $\theta$ est de l'ordre de quelques dizaines de minutes d'angle. Un système de positionnement de la tête permet d'assurer cette précision.

Comme illustré sur les figures 5A et 5B la tête 10 comporte les éléments suivants :

- les micropointes 13, comprises dans un matériau isolant 37, qui constituent la base du patin 11 muni d'un chanfrein aérodynamique,

- des guides optiques 39 pour amener ou prélever des ondes lumineuses au voisinage des micropointes 13 passant par le bras 40,

- les zones photosensibles 14 de ces micropointes 13 en regard de ces guides 39,

- une électrode 38 de la capacité de découplage 17, l'autre électrode étant constituée de la surface du support d'enregistrement 12,

- un épanouisseur 41 de guides, qui permet une interconnexion aisée de la tête à une nappe 47 de fibres de liaison vers l'unité de traitement 20. L'espacement D des guides 39 en sortie de l'épanouisseur 41 est typiquement de 250 μm (voire 125 μm), répartis sur une zone L alors que les micropointes 13 sont distantes de quelques 20 μm et réparties sur une distance I, l'axe 42 étant l'axe de direction des pistes du support d'enregistrement. L'épanouisseur 41, dans lequel les guides ne sont pas nécessairement rectilignes, comme représenté, est conçu pour minimiser les pertes de propagation,

- éventuellement deux réseaux 45 et 46 de microlentilles en vis-à-vis au pas de sortie D de l'épanouisseur, placées en extrémité des guides comme illustré sur la figure 5B, pour permettre une interconnexion aérienne de la tête à la nappe de fibres 47.

Une telle interconnexion de la tête au bus optique du système (nappes de fibres 47), par voie aérienne (réseaux 45 et 46), offre l'avantage, par rapport à une connexion directe de la nappe de fibres 47 à la tête, de réduire l'inertie de l'équipage mobile en dématérialisant le transport de lumière entre la tête et le bus optique. La distance entre les deux réseaux de lentilles 45 et 46 dépend de la position de la tête au dessus du disque.

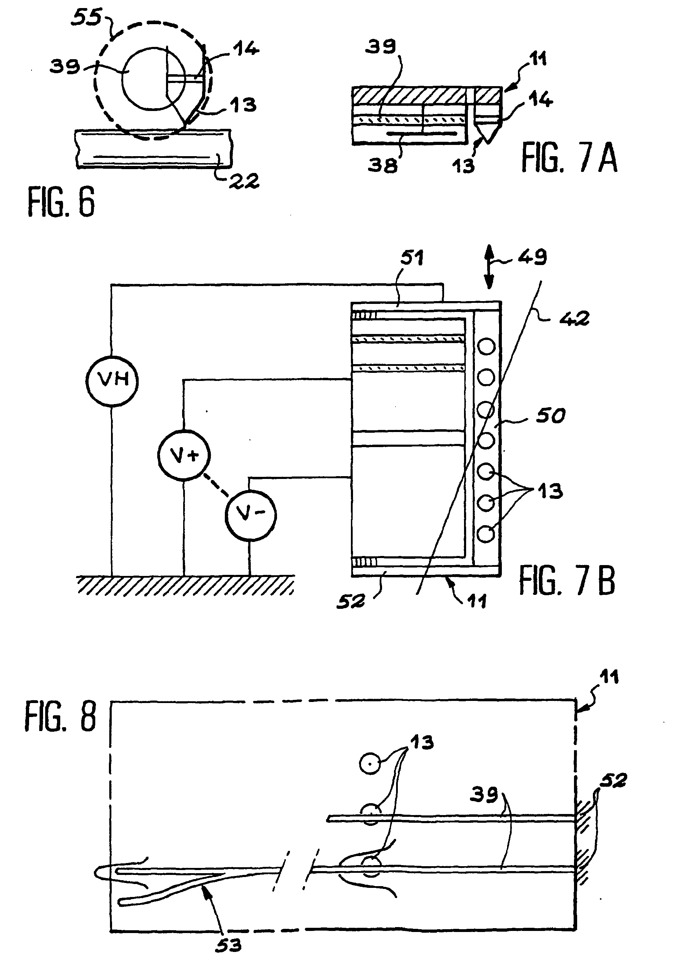

Sur la figure 6 est représentée l'onde évanescente 55 existant autour d'un guide optique 39. Elle s'étend sur quelques micromètres et baigne la micropointe correspondante 13. Le guide 39 peut éventuellement être effilé pour ajuster le couplage avec la micropointe.

Les micropointes 13 sont avantageusement réalisées en silicium, et comprises dans un matériau isolant 37 comme de la silice, éventuellement recouverte d'une couche de matériau dur pour éviter l'usure comme un nitrure ou carbure de silicium suivant des procédés classiques de microélectronique, comme décrit dans le document référencé [5]. Différentes méthodes pour réaliser les micropointes sont possibles comme mentionnées dans le document référencé [6].

La jonction semi-conductrice 14 PN ou PIN, au sein de la micropointe 13, peut être obtenue dans le silicium par implantation (dopage complémentaire N ou P) éventuellement par épitaxie.

Dans une variante de réalisation illustrée sur les figures 7A et 7B, le patin 11, représenté ici sans l'épanouisseur 41, comprend un actionneur qui permet de déplacer les micropointes 13 selon une direction 49 et ainsi de réduire l'inertie de positionnement des micropointes en regard des pistes du support d'enregistrement. Cet actionneur est avantageusement réalisé en technologie MEMS ("Micro Electro Mechanical Systems").

Le patin 11 est alors micro usiné afin de libérer un équipage mobile 50 portant les micropointes. Les bras de suspension 51 et 52 de l'équipage 50 sont préférentiellement en silicium (matériau élastique et déformable) qui, étant aussi dopé, permet de réaliser des électrodes en regard pour un actionneur électrostatique. La silice, qui forme la base du patin 11, sert à l'assemblage des différents éléments en silicium (électrodes) avec un matériau isolant.

L'actionneur électrostatique est mu par l'application simultanée d'une tension V+ sur l'une des électrodes et d'une tension opposée V- sur l'électrode opposée, symétrique.

Comme les micropointes 13 sont soumises à une tension VH (de 20 à 100 V), des forces électrostatiques existent sur les deux électrodes symétriques, ayant une valeur proportionnelle (on considère de manière approchée un coefficient de proportionnalité k dépendant des caractéristiques des électrodes en regard) au carré de l'écart de tension soit : $F = k(\Delta V)^2$ soit pour les deux bras de suspension 51 et 52 :

$$F1 = k(VH-V+)^2$$

$$F2 = k(VH-V-)^2 = k(VH+V+)^2$$

La résultante des forces vaut :

$$F1-F2 = 4\ k\ VH.V$$

si V = V+ = V-

Compte tenu de la valeur élevée de la tension VH, une faible modulation analogique de V engendre un déplacement significatif de l'équipage mobile 50 (1 à 2 µm dans la direction 49 des micropointes 49). Le déplacement des micropointes 13 par rapport aux pistes est toutefois démultiplié par le sinus de l'angle θ (déplacement tangentiel). Ainsi, la précision de positionnement atteinte est nano-métrique.

Dans une variante de réalisation illustrée sur la figure 8, pour optimiser le signal de détection en lecture, chaque guide optique 39 comporte en son extrémité un moyen 52 pour réfléchir l'onde guidée sur elle-même, par exemple un miroir par clivage, ou un réseau sur guide. Le pouvoir de réflexion de ce miroir est optimisé pour les deux modes de détection envisagés : mode SNOM ou SIAM. Dans le mode SNOM (détection en variation d'amplitude), ce miroir 52 sert de réflecteur pour un fonctionnement en double passage, il est donc très réflecteur. Dans le mode SIAM (détection de variation de phase), ce miroir 52 sert à retourner un signal de référence. Son pouvoir réflecteur est alors choisi pour optimiser un taux de modulation (10 %).

Dans le cas où la tête comporte un équipage mobile de micropointes et dans le mode de détection interférométrique (SIAM), il est possible de se servir de la réflexion parasite existant à l'interface des guides juste avant les micropointes, comme de signal de référence de phase.

L'onde réfléchie, qui porte l'information de lecture des micropointes, peut être déterminée par perturbation de l'impédance de la source d'émission (diodes lasers) ou par détection photodiode, après séparation de l'onde initiale (contra-propagative) par tout moyen optique directionnel, comme un séparateur Y 53 ou un coupleur directionnel, qui peut être intégré dans la tête comme représenté sur la figure 8.

## REFERENCES

[1] « Rare earth transition metal alloys for magneto-optical recording », J. Daval et B. Bechevet (Journal of Magnesium and Magnetic Materials 129, 1994, pages 98 à 107).

[2] « SPM base storage » de S. Hosaka (IEEE Trans. Magnetics, vol. 32, N° 3, mai 1996).

[3] « Atomic force microscope-based storage track servo and wear study » de B.D. Terris, S.A. Rishton, H.J. Mamin, R.P. Ried et D. Rugar (Applied Phys. A 66, S809-813, 1998)

[4] « Near field optical data storage » de B.D. Terris, H.J. Mamin et D. Rugar (Applied Phys. Letter 68, pages 141 à 143, janvier 1996).

[5] « Si-based integrated optics technologies », de S. Valette, J.P. Jadot, P. Gidon S. Renard, A. Fournier, A.M. Grouillet, H. Denis, P. Philippe et E. Desgranges (Solid St. Technol., pages 69 à 74, février 1989).

[6] « Use of Plasma processes for the fabrication of metal and silicon microtips cathodes » de R. Baptist (CIP 97, 11th International Colloquium on Plasma Processes, 25-29 mai 1997, Le Mans, France, Proceedings, SFV).

## Revendications

1. Dispositif d'écriture/lecture de données numériques à contrôle optique, comprenant une tête d'enregistrement (10) solidaire d'un équipage mobile (11), qui se déplace au-dessus d'un support d'enregistrement (12) muni de plusieurs pistes, **caractérisé en ce que** cette tête (10) comporte plusieurs micropointes (13) fonctionnant en parallèle, associées chacune à un circuit d'optique guidée, qui adressent les pistes du support d'enregistrement (12), **en ce que** chaque micropointe (13) fonctionne à la fois en modes écriture et lecture, **en ce que** le circuit d'optique guidée, associé à chaque micropointe :

   • se comporte, en mode écriture, comme un guide de lumière jusqu'à la zone photosensible de la micropointe,
   • collecte, en mode lecture, le signal de diffraction de l'onde incidente sur la micropointe,

   et **en ce que** les circuits d'optique guidée sont reliés directement à une unité de traitement (20) au travers d'un bus optique (21).

2. Dispositif selon la revendication 1, dans lequel le bus optique (21) est formé de fibres optiques (22).

3. Dispositif selon la revendication 1, dans lequel chaque micropointe (13) comporte des moyens de chauffage Joule localisé commandés optiquement, pour réaliser l'écriture d'un point mémoire sur le support d'enregistrement (12).

4. Dispositif selon la revendication 1, dans lequel chaque micropointe (13) comporte des moyens à effet de type SNOM ou SIAM pour réaliser la lecture d'un point mémoire sur le support d'enregistrement (12).

5. Dispositif selon la revendication 1 dans lequel chaque micropointe (13) comporte une capacité de découplage (17), dont une électrode est intégrée au sein de la tête et l'autre électrode est constituée par le support d'enregistrement (12), et une inductance ou résistance de découplage (17).

6. Dispositif selon la revendication 1, dans lequel chaque micropointe (13) comprend des moyens de contrôle du courant par effet photoélectrique.

7. Dispositif selon la revendication 5 dans lequel chaque micropointe (13) comprend une jonction semi-conductrice (14).

8. Dispositif selon la revendication 1, dans lequel dans chaque micropointe, les longueurs d'onde d'excitation sont différentes en mode lecture et en mode écriture.

9. Dispositif selon la revendication 1, dans lequel seulement une partie du flux incident est absorbé dans une jonction semi-conductrice (14) de chaque micropointe, l'autre partie servant en détection en lecture.

10. Dispositif selon la revendication 1, dans lequel plusieurs plateaux mémoire sont montés sur les mêmes axes du support d'enregistrement (12).

11. Dispositif selon la revendication 1, dans lequel le support d'enregistrement (12) est un disque mémoire

12. Dispositif selon la revendication 11, dans lequel la tête (10) adresse des pistes en spirales imbriquées (31), disposées sur le disque mémoire avec des repères de guidage de la tête sur le disque mémoire répartis sur une spirale (32) intercalée.

13. Dispositif selon la revendication 12, dans lequel une micropointe de la tête est dédiée à la lecture des repères de guidage de la tête.

14. Dispositif selon la revendication 11, dans lequel la tête d'enregistrement (10) a la forme d'un patin de forme aérodynamique qui vole par effet de coussin d'air au-dessus de la surface du disque mémoire.

**15.** Dispositif selon la revendication 14, dans lequel la tête( 10) comporte :

- des micropointes (13) comprises dans un matériau isolant (37) qui constituent la base du patin,
- des guides optiques (39) pour amener ou prélever des ondes lumineuses au voisinage des micropointes (13),
- une zone photo-sensible (14) de chaque micropointe en regard de chaque guide optique (39),
- une électrode de la capacité de découplage (17) l'autre électrode étant constituée du support d'enregistrement (12),
- un épanouisseur de guides (41).

**16.** Dispositif selon la revendication 15, dans lequel la tête (10) comprend deux réseaux (45, 46) de microlentilles en vis-à-vis au pas de sortie de l'épanouisseur (41), placées en extrémité des guides.

**17.** Dispositif selon la revendication 14 dans lequel l'équipage mobile (11) comprend un bras de suspension qui permet de maintenir le patin en regard des pistes du support d'enregistrement, avec un moteur de translation pour positionner la tête en regard de ces pistes.

**18.** Dispositif selon la revendication 15, dans lequel les micropointes (13) sont séparées d'une distance minimum de 20 μm.

**19.** Dispositif selon la revendication 15, dans lequel les micropointes (13) sont réalisées en silicium, et comprises dans un matériau isolant (37) en silice.

**20.** Dispositif selon la revendication 19, dans lequel la silice est recouverte d'une couche de nitrure de silicium.

**21.** Dispositif selon la revendication 14, dans lequel un actionneur est intégré dans le patin (11) pour déplacer les micropointes.

**22.** Dispositif selon la revendication 21, dans lequel le patin (11) est micro-usiné afin de libérer un équipage mobile (50) portant les micropointes (13.

**23.** Dispositif selon la revendication 1, dans lequel chaque circuit d'optique guidée comporte en son extrémité un moyen pour réfléchir l'onde guidée sur elle-même.

**24.** Dispositif selon l'une quelconque des revendications précédentes, qui est utilisé pour réaliser un dispositif de stockage à haute densité avec débit d'accès élevé aux données.

**25.** Dispositif selon l'une quelconque des revendications 1 à 23, qui est utilisé pour réaliser un dispositif d'écriture/lecture de bio-puces par champ proche en ultra haute densité.

**Patentansprüche**

**1.** Vorrichtung zum Schreiben/Lesen von digitalen Daten mit optischer Überwachung, umfassend einen Speicherkopf (10), welcher an einem beweglichen Teil (11) befestigt ist, das sich oberhalb eines mit mehreren Spuren versehenen Speicherträgers (12) fortbewegt,
**dadurch gekennzeichnet,**
**dass** dieser Kopf (10) mehrere parallel betriebene Mikrospitzen (13) umfasst, von denen jede mit einem optischen Leiterkreis verbunden ist, welcher die Spuren des Speicherträgers (12) adressiert,
**dass** jede Mikrospitze (13) gleichzeitig im Schreibmodus und im Lesemodus betrieben wird,
**dass** der mit jeder Mikrospitze verbundene optische Leiterkreis:

- sich im Schreibmodus wie ein Lichtleiter bis zu der lichtempfindlichen Zone der Mikrospitze verhält,
- im Lesemodus das Brechungssignal der auf die Mikrospitze einfallenden Welle sammelt,

und **dass** die optischen Leiterkreise durch einen optischen Bus (21) direkt mit einer Verarbeitungseinheit (20) verbunden sind.

**2.** Vorrichtung nach Anspruch 1, wobei der optische Bus (21) durch Lichtleitfasern (22) gebildet ist.

**3.** Vorrichtung nach Anspruch 1, wobei jede Mikrospitze (13) Mittel zur lokalisierten Joule-Erwärmung umfasst, welche optisch gesteuert sind, um das Schreiben eines Speicherpunkts auf dem Speicherträger (12) zu realisieren.

**4.** Vorrichtung nach Anspruch 1, wobei jede Mikrospitze (13) Funktionsmittel einer Art eines SNOM oder SIAM umfasst, um das Lesen eines Speicherpunkts auf dem Speicherträger zu realisieren.

**5.** Vorrichtung nach Anspruch 1, wobei jede Mikrospitze eine Entkopplungskapazität (17), von welcher eine Elektrode innerhalb des Kopfes integriert ist und die andere Elektrode durch den Speicherträger (12) gebildet ist, und eine Induktivität oder einen Widerstand (15) zur Entkopplung umfasst.

**6.** Vorrichtung nach Anspruch 1, wobei jede Mikrospitze (13) Mittel zur Stromsteuerung durch einen photoelektrischen Effekt umfasst.

**7.** Vorrichtung nach Anspruch 5, wobei jede Mikrospitze (13) einen Halbleiterübergang (14) umfasst.

**8.** Vorrichtung nach Anspruch 1, wobei für jede Mikrospitze die Anregungs-Wellenlängen im Lesemodus und im Schreibmodus verschieden sind.

**9.** Vorrichtung nach Anspruch 1, wobei nur ein Teil des einfallenden Flusses in einem Halbleiterübergang (14) jeder Mikrospitze absorbiert wird und der andere Teil zum Detektieren und Lesen dient.

**10.** Vorrichtung nach Anspruch 1, wobei mehrere Speicherplatten auf denselben Achsen des Speicherträgers (12) angebracht sind.

**11.** Vorrichtung nach Anspruch 1, wobei der Speicherträger (12) eine Speicherplatte ist.

**12.** Vorrichtung nach Anspruch 11, wobei der Kopf (10) die Spuren in ineinander geschobenen Spiralen (31) adressiert, welche auf der Speicherplatte mit Führungs-Markierungen des Kopfes, die auf der Speicherplatte auf einer ineinandergeschachtelten Spirale (32) verteilt sind, angeordnet sind.

**13.** Vorrichtung nach Anspruch 12, wobei eine Mikrospitze des Kopfes dazu bestimmt ist, die Führungsmarkierungen des Kopfes zu lesen.

**14.** Vorrichtung nach Anspruch 11, wobei der Speicherkopf (10) die Form einer aerodynamisch geformten Kufe aufweist, welche durch einen Luftkisseneffekt oberhalb der Speicherplatte fliegt.

**15.** Vorrichtung nach Anspruch 14, wobei der Kopf (10) umfasst:

- in einem isolierenden Material (37), welches die Basis der Kufe bildet, enthaltene Mikrospitzen (13),
- optische Leiter (39) zum Zuleiten oder Entnehmen von Lichtwellen in der Umgebung der Mikrospitzen (13),
- eine lichtempfindliche Zone (14) jeder Mikrospitze mit Blick auf jeden optischen Leiter (39),
- eine Elektrode der Entkopplungskapazität (17), wobei die andere Elektrode durch den Speicherträger (12) gebildet ist,
- einen Ausbreiter (41) der Leiter.

**16.** Vorrichtung nach Anspruch 15, wobei der Kopf (10) zwei Anordnungen (45, 46) von Mikrolinsen gegenüber der Ausgangsteilung des Ausbreiters (41), welche am Ende der Leiter angeordnet sind, umfasst.

**17.** Vorrichtung nach Anspruch 14, wobei das bewegliche Teil (11) einen Aufhängungsarm umfasst, welcher es ermöglicht, die Kufe im Blick der Spuren des Speicherträgers zu halten, mit einem Verschiebungs-Motor zum Positionieren des Kopfes im Blick dieser Spuren.

**18.** Vorrichtung nach Anspruch 15, wobei die Mikrospitzen (13) durch einen Minimalabstand von 20 μm getrennt sind.

**19.** Vorrichtung nach Anspruch 15, wobei die Mikrospitzen (13) aus Silizium gebildet sind und in einem isolierenden Material (37) aus Siliziumoxid enthalten sind.

**20.** Vorrichtung nach Anspruch 19, wobei das Siliziumoxid mit einer Schicht Siliziumnitrid bedeckt ist.

**21.** Vorrichtung nach Anspruch 14, wobei eine Betätigungsvorrichtung in die Kufe (11) integriert ist, um die Mikrospitzen zu bewegen.

**22.** Vorrichtung nach Anspruch 21, wobei die Kufe (11) mikro-verarbeitet ist, um ein bewegliches Teil (50), welches die Mikrospitzen (13) trägt, freizugeben.

**23.** Vorrichtung nach Anspruch 1, wobei jeder optische Leiterkreis an seinem Ende ein Mittel zum Reflektieren der Welle auf sich selbst umfasst.

**24.** Vorrichtung nach einem beliebigen der vorhergehenden Ansprüche, welche zur Realisierung einer Vorrichtung zur Speicherung in hoher Dichte mit hohem Datenzugriffsdurchsatz verwendet ist.

**25.** Vorrichtung nach einem beliebigen der Ansprüche 1 bis 23, welche zur Realisierung einer Vorrichtung zum Schreiben/Lesen von Bio-Chips im Nahfeld mit ultrahoher Dichte verwendet ist.

**Claims**

**1.** Device for writing/reading digital data with optical control, comprising a recording head (10) fixed to a mobile traveller (11) that moves above a recording support (12) on which several tracks are provided, **characterised in that** this head (10) comprises several microtips (13) operating in parallel, each associated with a guided optical circuit that address tracks of the recording support (12), **in that** each microtip (13) operates in write and read modes, **in that** the guided optical circuit associated with each microtip:

- in write mode, behaves like a light guide as far as the photosensitive area of the microtip,
- in read mode, collects the diffraction signal of the incident wave on the microtip,

and **in that** the guided optical circuits are directly connected to a processing unit (20) through an optical bus (21).

2. Device according to claim 1, in which the optical bus (21) is formed of optic fibres (22).

3. Device according to claim 1, in which each microtip (13) comprises localized optically controlled Joule heating means to write a memory point onto the recording support (12).

4. Device according to claim 1, in which each microtip (13) comprises SNOM or SIAM type effect means to read a memory point on the recording support (12).

5. Device according to claim 1, in which each microtip (13) comprises a decoupling capacitor (17), of which one electrode is integrated into the head and the other electrode is composed of the recording support (12) and a decoupling inductance or resistance (17).

6. Device according to claim 1, in which each microtip (13) comprises current control means by photoelectric effect.

7. Device according to claim 5, in which each microtip (13) comprises a semi conducting junction (14).

8. Device according to claim 1, in which the excitation wavelengths in each microtip are different in read mode and in write mode.

9. Device according to claim 1, in which only part of the incident flux is absorbed in a semi conducting junction (14) of each microtip, the other part being used in read detection.

10. Device according to claim 1, in which several memory plates are installed on the same recording support spindles (12).

11. Device according to claim 1, in which the recording support (12) is a memory disk.

12. Device according to claim 11, in which the head (10) addresses nested spiral tracks (31) arranged on the memory disk with head guide marks on the memory disk distributed in an intermediate spiral (32).

13. Device according to claim 12, in which a head microtip is dedicated to reading head guide marks.

14. Device according to claim 11, in which the recording head (10) is in the shape of an aerodynamically shaped pad which flies above the surface of the memory disk by an air cushion effect.

15. Device according to claim 14, in which the head (10) comprises:

   - microtips (13) embedded in an insulating material (37) that forms the base of the pad,
   - optical guides (39) to bring or pick up light waves close to microtips (13),
   - a photosensitive area (14) on each microtip facing each optical guide (39),
   - one electrode of the decoupling capacitor (17), the other electrode being composed of the recording support (12),
   - a guide spreader (41).

16. Device according to claim 15, in which the head (10) comprises two networks (45, 46) of microlenses facing each other at the output pitch from the spreader (41), placed at the end of the guides.

17. Device according to claim 14, in which the mobile traveller (11) comprises a suspension arm that holds the pad facing the tracks of the recording support, with a translation motor to position the head facing these tracks.

18. Device according to claim 15, in which the microtips (13) are separated by a minimum distance of 20 μm.

19. Device according to claim 15, in which the microtips (13) are made from silicon, and are embedded in a silica insulating material (37).

20. Device according to claim 19, in which the silica is covered by a layer of silicon nitride.

21. Device according to claim 14, in which an actuator is integrated into the pad (11) to displace the microtips.

22. Device according to claim 21, in which the pad (11) is micro-machined to release a mobile traveller (50) carrying the microtips (13).

23. Device according to claim 1, in which each guided optical circuit comprises a means at its end to reflect the guided wave on itself.

24. Device according to any one of the previous claims, used to make a high-density storage device with a high data access rate.

25. Device according to any one of claims 1 to 23, used to make an ultra high density near field biochip write/read device.

FIG. 1

FIG. 2

FIG. 3

FIG. 4

FIG. 5A

FIG. 5B

EP 1 312 083 B1

FIG. 6

FIG. 7 A

FIG. 7 B

FIG. 8